# EUROPÄISCHE PATENTSCHRIFT

(11) **EP 2 313 173 B1**
(45) Veröffentlichungstag und Bekanntmachung des Hinweises auf die Patenterteilung: **01.10.2014**
(21) Anmeldenummer: 09775990.6
(22) Anmeldetag: 21.07.2009
(51) Int. Cl.: B01D 17/02, B01D 21/00, B01D 45/08

(54) **PROFILLEISTE UND HIERAUS GEBILDETES ABSCHEIDEPAKET**
PROFILED STRIP AND SEPARATING ASSEMBLY FORMED THEREFROM
BAGUETTE PROFILÉE ET DISPOSITIF DE SÉPARATION COMPOSÉ DE CETTE BAGUETTE

(30) Priorität: 12.08.2008 DE 102008038698
(43) Veröffentlichungstag der Anmeldung: 27.04.2011
(73) Patentinhaber: Gea 2h Water Technologies GmbH, 52068 Aachen (DE)
(72) Erfinder: MARGGRAFF, Martin, 52146 Würselen (DE); KREICHA, Dieter, 72810 Gomaringen (DE)
(74) Vertreter: Döring, Wolfgang
(86) Internationale Anmeldenummer: PCT/DE2009/001014
(87) Internationale Veröffentlichungsnummer: WO 2010/017796

(56) Entgegenhaltungen:
- EP-A- 0 405 169
- EP-A- 0 559 056
- GB-A- 1 188 938

## Beschreibung

Die vorliegende Erfindung betrifft eine Profilleiste zum Einbau in wabenförmigen Abscheidepaketen für Absetzbecken, Sedimentsationsanlagen u. dgl. mit den Merkmalen des Oberbegriffs von Patentanspruch 1.

Solche Profilleisten werden entweder beim Hersteller selbst oder an der jeweiligen Einbaustelle zu Abscheidepaketen zusammengesetzt, die in entsprechende Kläreinrichtungen eingebaut werden. Bei solchen Kläreinrichtungen handelt es sich in der Regel um mit Schwerkraftsedimentation arbeitende Absetzbecken bzw. Sedimentationsanlagen. Das zu trennende Flüssigkeitsgemisch wird hierbei durch das wabenförmige Abscheidepaket geführt, wobei sich laminare Strömungsverhältnisse einstellen, die die Voraussetzung für jeden Sedimentationsvorgang bilden. Durch die geschlossenen Kanäle des Wabensystems werden laminare Strömungsverhältnisse begünstigt. Um einen sicheren Schlammaustrag zu gewährleisten, sind derartige Abscheidepakete normalerweise schräg zur Horizontalen eingebaut, beispielsweise in einem Winkel von 60°.

Bevorzugte Anwendungsgebiete sind Wasseraufbereitung, Abwasserreinigung, Nachklärung in biologischen Kläranlagen, Vorklärung kommunaler Abwässer, Abwasserreinigung in der Industrie etc.

Eine Profilleiste gemäß Oberbegriff von Patentanspruch 1 ist aus der EP 0 559 056 B1 bekannt. Diese bekannte Profilleiste kann kleinvolumig verpackt werden und ist zur Ausbildung eines stabilen Verbandes mit anderen Profilleisten zusammensteckbar. Zum Aufbau einer Wabe sind insgesamt vier Nut/Feder-Verbindungsbereiche vorgesehen, mittels denen die vier eine Wabe bildenden Profilleisten aneinander befestigt werden. Hierzu werden die einzelnen Leisten zusammengesteckt, wobei die Federn in die Nuten eingeschoben werden. Danach erfolgt die gewünschte dauerhafte Befestigung.

Um die Herstellung von besonders stabilen Abscheidepaketen zu ermöglichen, weist jede bekannte Profilleiste an den Basisseiten und an den Anschlussseiten solche Nut/Feder-Verbindungsabschnitte auf, die sich jeweils aus zwei Nut-Verbindungsabschnitten bzw. zwei Feder-Verbindungsabschnitten zusammensetzen, so dass beim Zusammensetzen eines Abscheidepaketes immer zwei benachbarte Nut-Verbindungsabschnitte bzw. Feder-Verbindungsabschnitte der einen Profilleiste mit zwei Feder-Verbindungsabschnitten bzw. Nut-Verbindungsabschnitten der anderen Profilleiste zusammengesteckt werden. Hierbei liegen sich die jeweiligen benachbarten Nut- oder Feder-Verbindungsabschnitte gegenüber, so dass beim Zusammensetzen von zwei Profilleisten die eine Leiste von vorne in die andere Leiste eingeschoben werden muss. Ein seitliches Einschieben zu Montagezwecken ist nicht möglich, da, wie erwähnt, die beiden benachbarten Nut- bzw. Feder-Verbindungsabschnitte entgegengesetzt zueinander angeordnet sind.

Aus der GB 1 188 938 ist eine Profilleiste bekannt, die im Wesentlichen eben ist und an einem Ende eine Verdickung aufweist, welche als Fangrippe ausgebildet ist und eine Nut besitzt, in die das andere Ende einer benachbarten Profilleiste einsteckbar ist. Durch Aneinandersetzen von mehreren Profilleisten lassen sich zickzackförmig gestaltete Strukturen bilden.

Aus der EP 0405169 ist eine Profilleiste bekannt, die zwei Basisseiten und eine Anschlussseite aufweist. Am an die Anschlussseite stoßenden Ende der Basisseite befindet sich eine Nut, die von einem nach innen weisenden Abschnitt der Basisseite gebildet wird. Am Ende der Anschlussseite befindet sich eine Verdickung, die als Feder wirkt.

Der vorliegenden Erfindung liegt die Aufgabe zugrunde, eine Profilleiste der angegebenen Art zu schaffen, die einen besonders einfachen Aufbau aufweist und sich besonders einfach zu Abscheidepaketen zusammensetzen lässt.

Diese Aufgabe wird erfindungsgemäß bei einer Profilleiste der angegebenen Art durch die kennzeichnenden Merkmale von Patentanspruch 1 gelöst.

Überraschenderweise wurde erfindungsgemäß festgestellt, dass zur Ausbildung eines ausreichend stabilen Abscheidepaketes an den Verbindungsstellen der einzelnen Profilleisten keine beidseitige Halterung wie beim Stand der Technik, bei dem die Halterung durch zwei gegeneinander weisende Nuten, die mit zwei voneinander weg weisenden Federn in Eingriff stehen, mehr erforderlich ist, sondern dass stattdessen die Verbindungsstellen von einer einzigen Nut in Zusammenwirkung mit einer einzigen Feder gebildet sein können, ohne dass hierdurch ein wesentlicher Stabilitätsverlust eintritt. Darüber hinaus bietet diese erfindungsgemäße Lösung den großen Vorteil, dass beim Montieren der Profilleisten aneinander zur Erstellung von Abscheidepaketen ein seitliches Einschieben von Nut und Feder möglich und kein Einschieben von vorne mehr erforderlich ist. Auf diese Weise wird die Montage zu Abscheidepaketen beträchtlich vereinfacht. Dadurch, dass man nicht mehr auf ein Einschieben bzw. Durchschieben angewiesen ist, können einige Toleranzen kleiner gefasst werden, da keine Rücksicht auf den Reibungswiderstand zwischen Nut und Feder genommen werden muss. Darüber hinaus wird die Montagegeschwindigkeit erhöht.

Die Verbindung der erfindungsgemäßen Profilleisten aneinander kann rein mechanisch durch Einsetzen von Nut und Feder an den jeweiligen Verbindungsabschnitten erfolgen. Zusätzlich hierzu können die einzelnen Profilleisten aber auch mit weiteren Verbindungstechniken aneinander befestigt werden, beispielsweise durch Verkleben oder Verschweißen.

In Weiterbildung der Erfindung ist jeder Nut- und Federverbindungsabschnitt mit Mitteln zum Verrasten von Nut und Feder versehen. Hierbei wird daher die Verbindung zwischen den einzelnen Profilleisten zusätzlich zum Einstecken von Nut und Feder durch Verrastungsmittel erzielt, um auf dieser Weise einen besonders festen Sitz der Feder in der Nut zu erzielen. Die Verrastung von Nut und Feder verhindert dabei, dass die Verbindung durch Herausziehen der Feder aus der Nut in einfacher Weise wieder gelöst werden kann. Bei einer entsprechenden Verrastung ist eine derartige Trennung nur nach relativ großem Kraftaufwand möglich. Natürlich kann eine solche Verrastung auch dann durchgeführt werden, wenn zusätzliche Verbindungstechniken eingesetzt werden, wie Verkleben oder Schweißen.

Was die vorgesehenen Mittel zum Verrasten von Nut und Feder anbetrifft, so werden diese Mittel durch Vorsprünge und/oder Vertiefungen an den Nut/Feder-Verbindungsabschnit-ten gebildet, aber auch durch Hinterschneidungen an den Nut/Feder-Verbindungsabschnitten. Dabei ist insbesondere ein Vorsprung/eine Hinterschneidung an einer Feder und eine Vertiefung/Hinterschneidung an der Außenwand einer Nut ausgebildet oder umgekehrt. Beim Zusammensetzen wird dabei die entsprechende Feder seitlich in die zugehörige Nut eingeschoben, bis die an der Feder vorgesehene Vertiefung bzw. Hinterschneidung den an der Außenwand der Nut vorgesehenen Vorsprung bzw. die entsprechende Hinterschneidung passiert hat und Vorsprung und Vertiefung bzw. die Hinterschneidungen verrasten. Je nach Ausgestaltung der Mittel zum Verrasten kann ein Trennen der Profilleisten voneinander mit entsprechend großem Kraftaufwand möglich oder ganz ausgeschlossen sein.

Generell wird ein wabenförmiges Abscheidepaket so zusammengebaut, dass die Nut-Verbindungsabschnitte einer Profilleiste mit Feder-Verbindungsabschnitten von benachbarten Profilleisten in Eingriff gebracht werden. Eine achteckige Wabe wird dabei von den Basisseiten von zwei Profilleisten, den Anschlussseiten von einer dieser Profilleisten und den Anschlussseiten von zwei anderen Profilleisten gebildet. Am Aufbau einer Wabe sind daher insgesamt vier Profilleisten beteiligt. Da die Verbindungsstellen gleich sind und jeweils aus einer Nut und einer Feder bestehen, ist der Zusammenbau zu einem Abscheidepaket einfach und wird, wie erwähnt, dadurch erleichtert, dass ein seitliches Zusammensetzen möglich ist, weil an einer Seite immer nur ein einziger Verbindungsabschnitt vorhanden ist.

Die vorliegende Erfindung betrifft ferner ein aus einer Vielzahl von Profilleisten der vorstehend beschriebenen Art zusammengesetztes wabenförmiges Abscheidepaket, bei dem die einzelnen Waben achteckförmig ausgebildet sind, wobei deren acht Seiten durch die zwei Basis- und zwei Anschlussseiten einer ersten Profilleiste, zwei Anschlussseiten einer zweiten und dritten Profilleiste und die Basisseiten einer vierten Profilleiste in Parallellage zu den ersten beiden Basisseiten gebildet sind. Bei einem derartigen Abscheidepaket können die einzelnen Profilleisten rein mechanisch miteinander verbunden sein, und zwar durch das Ineinanderstecken von Nut und Feder der entsprechenden Nut/FederVerbindungen. Zusätzlich hierzu kann die Verbindung durch Verrasten von Nut und Feder der Nut/Feder-Verbindungen erfolgen. Ferner betrifft die vorliegende Erfindung ein Abscheidepaket, bei dem die einzelnen Profilleisten durch zusätzliche Verbindungstechniken miteinander verbunden sind, beispielsweise verklebt oder verschweißt sind.

Es sei noch erwähnt, dass die Mittel zum Verrasten auch so ausgebildet sein können, dass ein Vorsprung/eine Hinterschneidung an einer der Feder gegenüberliegenden Wand und eine Vertiefung/Hinterschneidung an der Außenseite des die Nut bildenden Wandabschnitts ausgebildet sind oder umgekehrt.

Die Erfindung wird nachfolgend anhand eines Ausführungsbeispiels in Verbindung mit der Zeichnung im Einzelnen erläutert. Es zeigen:
- Figur 1: einen schematischen Querschnitt durch eine Profilleiste;
- Figur 2: einen schematischen Querschnitt durch einen Teil eines aus Profilleisten der Figur 1 zusammengesetzten Abscheidepaketes; und
- Figur 3: einen schematischen Querschnitt durch eine Verbindungsstelle zweier Profilleisten der Figuren 1 und 2.

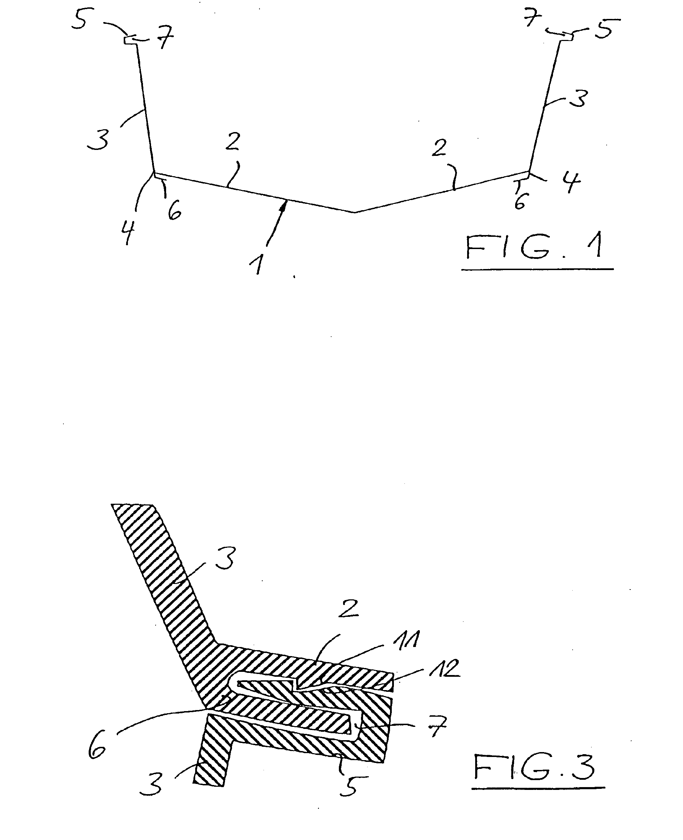

Die in Figur 1 dargestellte Profilleiste 1 ist zum Einbau in ein wabenförmiges Abscheidepaket bestimmt und besitzt eine senkrecht oder schräg zu ihren Stirnflächen verlaufende Längsachse. Die Profilleiste 1 weist zwei miteinander einen stumpfen Winkel bildende Basisseiten 2 auf, an die sich jeweils eine Anschlussseite 3 unter einem stumpfen Winkel anschließt. Die Profilleiste 1 ist so ausgebildet, dass sich mehrere Profilleisten ineinander stapeln lassen.

An den an die Anschlussseiten 3 stoßenden Enden der Basisseiten 2 befinden sich Feder-Verbindungsabschnitte 4, die eine etwa parallel zur zugehörigen Basisseite 2 verlaufende zungenförmige Feder 6 aufweisen. An den Enden der Anschlussseiten 3 befinden sich Nut-Verbindungsabschnitte 5, welche eine durch einen auswärts und folgenden einwärts verlaufenden Seitenabschnitt gebildete Nut 7 aufweisen. Die Federn 6 und die Nuten 7 sind so ausgebildet, dass sie ineinandersetzbar bzw. ineinander steckbar sind, um eine mechanische Verbindung zwischen benachbarten Profilleisten zu bilden.

Als Material für die Profilleiste kommen insbesondere geeignete Kunststoffe in Frage.

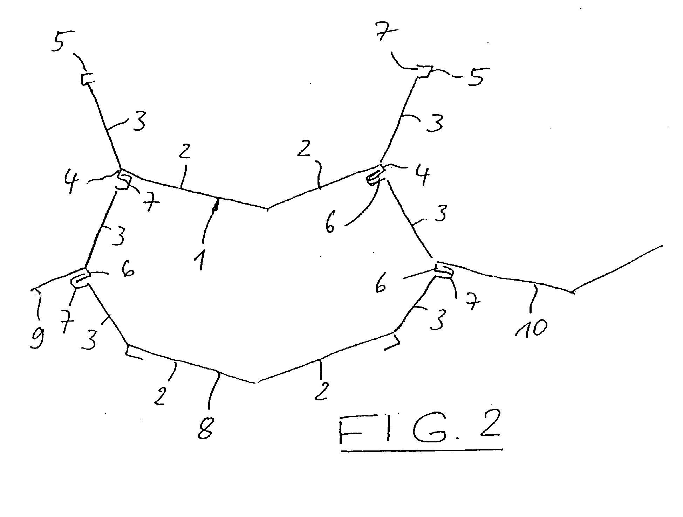

Figur 2 zeigt einen schematischen Querschnitt durch einen Teil eines aus mehreren Profilleisten 1 zusammengesetzten Abscheidepaketes. In der Figur sind insgesamt vier Profilleisten 1, 8, 9 und 10 dargestellt. Dabei bilden die beiden Basisseiten 2 und die beiden Anschlussseiten 3 der Profilleiste 8, die beiden Basisseiten 2 der Profilleiste 1 und die beiden Anschlussseiten 3 der Profilleisten 9 und 10 eine achteckige Wabe. Die Verbindung zwischen den einzelnen Profilleisten wird durch Ineinanderstecken bzw. Ineinandersetzen der jeweiligen Federn und Nuten bewerkstelligt. Dabei werden im Einzelnen die Federn 6 an den Basisseiten 2 der Profilleiste 1 in die Nuten 7 an den Anschlussseiten 3 der Profilleisten 9 und 10 sowie die Federn 6 an den Basisseiten der Profilleisten 9, 10 in die Nuten 7 an den Anschlussseiten 3 der Profilleiste 8 eingesetzt.

Eine entsprechende Verbindungsstelle ist im größeren Maßstab in Figur 3 dargestellt. Es ist hierbei die Verbindung zwischen einer Feder 6 an einer Basisseite 2 einer Profilleiste und einer Nut 7 an einer Anschlussseite 3 einer anderen Profilleiste dargestellt. Wie in Figur 3 gezeigt, ist der entsprechende Nut/Feder-Verbindungsabschnitt zusätzlich mit Mitteln zum Verrasten versehen, um eine sichere Verbindung zwischen Nut und Feder zu ermöglichen und ein Herausziehen der Feder aus der Nut zu verhindern. Diese Mittel zum Verrasten werden von einer Hinterschneidung 11 an der Außenseite der Basisseite 2 gegenüber der Feder 6, die einen vorstehenden Abschnitt bildet, und einer Hinterschneidung 12 an der Außenseite des die Nut 7 bildenden Wandabschnitts der Anschlussseite 3 der anderen Profilleiste in der Form einer Vertiefung gebildet. Die hier dargestellte Ausführungsform ist lediglich beispielhaft und kann durch andere geeignete Maßnahmen ersetzt werden.

Bei einem seitlichen Einschieben der Feder 6 in die Nut 7 findet eine Verrastung (Clip-Effekt) statt, wenn die vorstehende und zurückspringende Hinterschneidung 11, 12 in Eingriff treten.

## Patentansprüche

1. Profilleiste (1) zum Einbau in wabenförmigen Abscheidepaketen für Absetzbecken, Sedimentationsanlagen u. dgl., die wannenförmig ausgebildet ist und zwei einen stumpfen Winkel miteinander bildende lange Basisseiten (2) aufweist, von denen jede unter Bildung eines stumpfen Winkels in eine kurze Anschlussseite (3) übergeht, wobei die Basisseiten (2) unter Bildung eines solchen stumpfen Winkels in die Anschlussseiten (3) übergehen, dass eine Vielzahl von Profilleisten (1) ineinander stapelbar ist, das zusammengesetzte Abscheidepaket von achteckigen Waben und jede Wabe von vier Profilleisten (1) gebildet ist und an den Anschlussseiten (3) und an den Basisseiten (2) Nut/Feder-Verbindungabschnitte (4, 5) zum Zusammensetzen der wabenförmigen Abscheidepakete vorgesehen sind, die je eine von den an die Anschlussseiten (3) stoßenden Enden der Basiseiten (2) ausgehende und etwa parallel zur Basisseite (2) verlaufende Feder (6) und an den freien Enden der Anschlussseiten (3) je eine durch einen auswärts und einen folgenden einwärts verlaufenden Seitenabschnitt gebildete Nut (7) besitzen, **dadurch gekennzeichnet, dass** die Profilleiste (1) aus vier Seiten besteht und dass sich an den freien Enden der Anschlussseiten (3) je eine einzige Nut (7) und an den Basisseiten (2) je eine einzige Feder (6) befinden, die beim Montieren der Profilleisten (1) aneinander ein seitliches Einschieben der Federn (6) und Nuten (7) der anderen Profilleisten (1) ermöglichen.

2. Profilleiste nach Anspruch 1, **dadurch gekennzeichnet, dass** jeder Nut/Feder-Verbindungsabschnitt (4, 5) mit Mitteln zum Verrasten von Nut und Feder versehen ist.

3. Profilleiste nach Anspruch 2, **dadurch gekennzeichnet, dass** die Mittel zum Verrasten durch Vorsprünge und/oder Vertiefungen an den Nut/Feder-Verbindungsabschnitten (4, 5) gebildet sind.

4. Profilleiste nach Anspruch 2, **dadurch gekennzeichnet, dass** die Mittel zum Verrasten durch Hinterschneidungen (11, 12) an den Nut/Feder-Verbindungsabschnitten (4, 5) gebildet sind.

5. Profilleiste nach einem der Ansprüche 3 oder 4, **dadurch gekennzeichnet, dass** ein Vorsprung/eine Hinterschneidung an einer Feder und eine Vertiefung/Hinterschneidung an der Außenwand einer Nut ausgebildet sind oder umgekehrt.

6. Profilleiste nach einem der Ansprüche 3 oder 4, **dadurch gekennzeichnet, dass** ein Vorsprung/eine Hinterschneidung (11) an einer der Feder (7) gegenüberliegenden Wand und eine Vertiefung/Hinterschneidung (12) an der Außenseite des die Nut (7) bildenden Wandabschnitts ausgebildet sind oder umgekehrt.

7. Aus einer Vielzahl von Profilleisten nach einem der Ansprüche 1-6 zusammengesetztes wabenförmiges Abscheidepaket, bei dem die einzelnen Waben achteckförmig ausgebildet sind, wobei deren acht Seiten durch die zwei Basis- und zwei Anschlussseiten (2, 3) einer ersten Profilleiste (8), zwei Anschlussseiten (3) einer zweiten und dritten Profilleiste (9, 10) und die zwei Basisseiten (2) einer vierten Profilleiste (1) in Parallellage zu den ersten beiden Basisseiten (2) gebildet sind.

8. Abscheidepaket nach Anspruch 7, **dadurch gekennzeichnet, dass** die einzelnen Profilleisten (1, 8, 9, 10) durch zusätzliche Verbindungstechniken miteinander verbunden sind, insbesondere miteinander verklebt oder verschweißt sind.

## Claims

1. A profiled strip (1) for the installation in honeycomb-like separator packages for sedimentation basins, sedimentation installations, etc., said profiled strip (1) having a trough-like shape and two long base sides (2) forming an obtuse angle with one another, each of the base sides, with the formation of an obtuse angle, merging into a short connection side (3), wherein the base sides (2) merge into the connection sides (3) with the formation of such an obtuse angle that a plurality of profiled strips (1) can be stacked one inside the other, the assembled separator package is formed by octagonal honeycombs and each honeycomb is formed by four profiled strips (1), and groove and tongue connection portions (4,5) for assembling the honeycomb-like separator packages are provided at the connection sides (3) and at the base sides (2), the groove and tongue connection portions (4,5) having each a tongue (6) emanating from the ends of the base sides (2) joining the connection sides (3) and extending approximately parallel with respect to a base side (2) and each having at the free ends of the connection sides (3) a groove (7) formed by an outwardly and a following inwardly extending side portion, **characterized in that** the profiled strip (1) consists of four sides and that a single groove (7) is located at the free ends of the connection sides (3) and a single tongue (6) is located at the base sides (2) which enable that the tongues (6) and grooves (7) of the other profiled strips (1) can be laterally pushed in when the profiled strips (1) are mounted to one another.

2. The profiled strip according to claim 1, **characterized in that** each groove and tongue connection portion (4,5) is provided with means for the interlocking of groove and tongue.

3. The profiled strip according to claim 2, **characterized in that** the means for the interlocking of groove and tongue are formed by projections and/or depressions at the groove and tongue portions (4,5).

4. The profiled strip according to claim 2, **characterized in that** the means for interlocking are formed by undercuts (11,12) at the groove and tongue connection portions (4,5)

5. The profiled strip according to one of the claims 3 or 4, **characterized in that** a projection/an undercut is formed at a tongue and a depression/undercut is formed at the outer side of a groove or vice versa.

6. The profiled strip according to one of the claims 3 or 4, **characterized in that** a projection/an undercut (11) is formed at a wall opposite to a tongue (7) and a depression/undercut (12) is formed at the outer side of the wall portion forming the groove (7) or vice versa.

7. A honeycomb-like separator package assembled from a plurality of profiled strips according to one of the claims 1 - 6 according to which the individual honeycombs are formed octagonally wherein the eight sides thereof are formed by the two base sides and the two connection sides (2,3) of a first profiled strip (2), two connection sides (3) of a second and third profiled strip (9,10) and the two base sides (2) of a fourth profiled strip (1) in parallel position with respect to the first two base sides (2).

8. A separator package according to claim 7, **characterized in that** the individual profiled strips (1,8,9,10) are connected by means of additional connecting techniques, especially are glued or welded with one another.

## Revendications

1. Baguette profilée (1) destinée à être montée dans des ensembles de séparation alvéolaires pour bassins de décantation, installations de sédimentation et similaires, qui est conçue en forme de cuvette et présente deux longs côtés de base (2) qui forment entre eux un angle obtus et dont chacun se transforme en un court côté de raccordement (3) en formant un angle obtus, les côtés de base (2) se transformant en côtés de raccordement (3) en formant un angle obtus tel qu'une pluralité de baguettes profilées (1) peuvent être empilées les unes dans les autres, l'ensemble de séparation assemblée étant formé d'alvéoles octogonales et chaque alvéole étant formée de quatre baguettes profilées (1) et des parties de liaison à rainure / languette (4, 5) étant prévues sur les côtés de raccordement (3) et les côtés de base (2) pour assembler les ensembles de séparation alvéolaires qui ont chacun une languette (6) partant des extrémités des côtés de base (2) aboutant aux côtés de raccordement (3) et s'étendant approximativement parallèlement aux côtés de base (2) et une rainure (7) formée par une partie de côté s'étendant vers l'extérieur et une partie suivante s'étendant vers l'intérieur aux extrémités libres des côtés de raccordement (3), **caractérisée en ce que** la baguette profilée (1) est constituée de quatre côtés et **en ce qu'**une seule rainure (7) se trouve aux extrémités libres des côtés de raccordement (3) et une seule languette (6) se trouve sur les côtés de base (2) lesquelles permettent, lors du montage des baguettes profilées (1) l'une sur l'autre, une insertion latérale des languettes (6) et rainures (7) des autres baguettes profilées (1).

2. Baguette profilée selon la revendication 1, **caractérisée en ce que** chaque partie de liaison à rainure / languette (4, 5) est pourvue de moyens d'encliquetage de rainure et de languette.

3. Baguette profilée selon la revendication 2, **caractérisée en ce que** les moyens d'encliquetage sont formés par des saillies et/ou des creux sur les parties de liaison à rainure / languette (4, 5).

4. Baguette profilée selon la revendication 2, **caractérisée en ce que** les moyens d'encliquetage sont formés par des contre-dépouilles (11, 12) sur les parties de liaison à rainure / languette (4, 5).

5. Baguette profilée selon l'une quelconque des revendications 3 ou 4, **caractérisée en ce qu'**une saillie / une contre-dépouille est formée sur une languette et un creux / une contre-dépouille est formé sur la paroi extérieure d'une rainure ou vice-versa.

6. Baguette profilée selon l'une quelconque des revendications 3 ou 4, **caractérisée en ce qu'**une saillie / une contre-dépouille (11) est formée sur une paroi opposée à la languette (7) et un creux / une contre-dépouille (12) est formé sur le côté extérieur de la partie de paroi formant la rainure (7) ou vice-versa.

7. Ensemble de séparation alvéolaire composé d'une pluralité de baguettes profilées selon l'une quelconque des revendications 1 - 6, dans lequel les alvéoles individuelles sont de forme octogonale, leurs huit côtés étant formés par les deux côtés de base et deux côtés de raccordement (2, 3), une première baguette profilée (8), deux côtés de raccordement (3) d'une deuxième et troisième baguette profilée (9, 10) et les deux côtés de base (2) d'une quatrième baguette profilée (1) en position parallèle aux deux premiers côtés de base (2).

8. Ensemble de séparation selon la revendication 7, **caractérisé en ce que** les baguettes profilées (1, 8, 9, 10) individuelles sont reliées, en particulier collées ou soudées ensemble, par des techniques de liaison supplémentaires.
